# EUROPEAN PATENT APPLICATION

(11) **EP 4 730 321 A1**
(43) Date of publication of application: **22.04.2026**
(21) Application number: 24823327.2
(22) Date of filing: 10.06.2024
(51) Int. Cl.: G10H 1/00

(54) **CONTROLLER, MUSICAL SOUND GENERATION SYSTEM, METHOD, PROGRAM, AND STORAGE MEDIUM**

(30) Priority: 16.06.2023 JP 2023099112
(71) Applicant: DENTSU INC., Tokyo 105-7001 (JP)
(72) Inventor: TANAKA Naoki, Tokyo 105-7001 (JP); MURAKAMI Shintaro, Tokyo 105-7001 (JP); KUKI Keita, Tokyo 105-7001 (JP); AI Kohei, Tokyo 105-7001 (JP); MUTO Masatane, Tokyo 108-0073 (JP)
(74) Representative: Bardehle Pagenberg Partnerschaft mbB Patentanwälte Rechtsanwälte
(86) International application number: PCT/JP2024/020975
(87) International publication number: WO 2024/257711

(57) **Abstract**

A controller that controls a musical sound generation device includes an acquisition unit that acquires gaze information of a user, a display control unit that displays a plurality of operating portions associated with control commands of the musical sound generation device on a display unit, and displays a pointer for selecting the operating portion on the display unit based on the gaze information acquired by the acquisition unit, a determination unit that determines selection of an operating portion overlapping at least a part of the pointer among the plurality of operating portions, and a communication unit that transmits, to the musical sound generation device, information conforming to a MIDI standard corresponding to the operating portion of which the selection has been determined by the determination unit, and the plurality of operating portions include at least one fader operating portion that switches a sound source being played from a first sound source to a second sound source.

## Description

### Technical Field

The present invention relates to a controller, a musical sound generation system, a method, a program, and a storage medium.

### Background Art

Conventionally, a performance interface that generates performance control information for controlling musical sound generated from a musical sound generation device according to a physical condition of an operating person is known (see Patent Literature 1).

### Citation List

### Patent Literature

Patent Literature 1: JP 2001-195059 A

### Summary of Invention

### Technical Problem

However, conventionally, there has been no proposal for use by a user with limited movement of a body, such as an ALS patient.

A problem to be solved by the present invention is to enable a user with limited movement of a body to easily control a musical sound generation device.

### Solution to Problem

[1] A controller that controls a musical sound generation device, the controller including:
   an acquisition unit that acquires gaze information of a user;
   a display control unit that displays a plurality of operating portions associated with control commands of the musical sound generation device on a display unit, and displays a pointer for selecting the operating portion on the display unit based on the gaze information acquired by the acquisition unit;
   a determination unit that determines selection of an operating portion overlapping at least a part of the pointer among the plurality of operating portions; and
   a communication unit that transmits, to the musical sound generation device, information conforming to a MIDI standard corresponding to the operating portion of which the selection has been determined by the determination unit, in which
   the plurality of operating portions include at least one fader operating portion that switches a sound source being played from a first sound source to a second sound source.
[2] The controller according to [1], in which the at least one fader operating portion includes a cross-fader operating portion including a shaft part and a knob, and the cross-fader operating portion continuously changes a volume of each of the first sound source and the second sound source according to a position of the knob on the shaft part.
[3] The controller according to [1] or [2], in which the at least one fader operating portion includes a fader pattern operating portion for continuously changing a volume of each of the first sound source and the second sound source in a pattern stored in advance.
[4] The controller according to any one of [1] to [3], in which the plurality of operating portions include a first operating portion group that performs an operation on the first sound source and a second operating portion group that performs an operation on the second sound source.
[5] The controller according to [4], in which the display control unit highlights the first operating portion group in a case where a volume of the first sound source is larger than a volume of the second sound source, and highlights the second operating portion group in a case where the volume of the second sound source is larger than the volume of the first sound source.
[6] The controller according to [4] or [5], in which the determination unit determines selection of an operating portion included in the first operating portion group in a case where a volume of the first sound source is larger than a volume of the second sound source, and determines selection of an operating portion included in the second operating portion group in a case where the volume of the second sound source is larger than the volume of the first sound source.
[7] The controller according to any one of [4] to [6], in which the first operating portion group includes a sound source selection operating portion for selecting an odd-numbered sound source among a plurality of sound sources to be continuously played, and
   the first operating portion group includes a sound source selection operating portion for selecting an even-numbered sound source among the plurality of sound sources to be continuously played.
[8] The controller according to [7], in which the first operating portion group is displayed on a left side of the display unit, and
   the second operating portion group is displayed on a right side of the display unit.
[9] The controller according to [8], in which the plurality of operating portions include a plurality of clip selection operating portions for selecting a video clip to be displayed during play of a sound source, and the plurality of clip selection operating portions are displayed between the first operating portion group and the second operating portion group.
[10] The controller according to any one of [4] to [9], in which the first operating portion group and the second operating portion group include an effect operating portion for applying an effect to a sound source being played.
[11] The controller according to any one of [4] to [10], in which the first operating portion group and the second operating portion group include an XY pad capable of simultaneously changing two types of parameters.
[12] The controller according to any one of [1] to [11], in which the plurality of operating portions include a screen switching operating portion for performing switching to a screen on which another operating portion is displayed.
[13] The controller according to any one of [1] to [12], further including: a reception unit that receives an input operation by a user using an input device, in which
   the determination unit determines the selection of the operating portion according to the input operation received by the reception unit.
[14] The controller according to [13], in which the input operation is pressing of a switch with a part of a body of the user, and
   the determination unit determines the selection of the operating portion by using gaze information of the user without a user operation other than the pressing of the switch.
[15] The controller according to any one of [1] to [14], in which the determination unit determines selection of an operating portion that overlaps at least a part of the pointer for a predetermined time.
[16] The controller according to any one of [1] to [15], in which the determination unit determines selection of an operating portion overlapping a reference position of the pointer.
[17] The controller according to [16], in which the reference position is substantially a center of the pointer.
[18] The controller according to any one of [1] to [17], in which the display control unit displays beats and bar numbers of music being performed near the pointer.
[19] The controller according to any one of [1] to [18], in which the determination unit determines the selection of the operating portion without a user operation other than the gaze information of the user.
[20] A musical sound generation system including a musical sound generation device and a controller that controls the musical sound generation device, the musical sound generation system including:
   an acquisition unit that acquires gaze information of a user;
   a display control unit that displays a plurality of operating portions associated with control commands of the musical sound generation device on a display unit, and displays a pointer for selecting the operating portion on the display unit based on the gaze information acquired by the acquisition unit;
   a determination unit that determines selection of an operating portion overlapping at least a part of the pointer among the plurality of operating portions; and
   a communication unit that transmits, to the musical sound generation device, information conforming to a MIDI standard corresponding to the operating portion of which the selection has been determined by the determination unit, in which
   the plurality of operating portions include at least one fader operating portion that switches a sound source being played from a first sound source to a second sound source.
[21] A method of controlling a musical sound generation device, the method including:
   a step of acquiring gaze information of a user;
   a step of displaying a plurality of operating portions associated with control commands of the musical sound generation device on a display unit, and displaying a pointer for selecting the operating portion on the display unit based on the gaze information;
   a step of determining selection of an operating portion overlapping at least a part of the pointer among the plurality of operating portions; and
   a step of transmitting, to the musical sound generation device, information conforming to a MIDI standard corresponding to the determined operating portion, in which
   the plurality of operating portions include at least one fader operating portion that switches a sound source being played from a first sound source to a second sound source.
[22] A program for causing a computer to execute a method of controlling a musical sound generation device, the method including:
   a step of displaying a plurality of operating portions associated with control commands of the musical sound generation device on a display unit, and displaying a pointer for selecting the operating portion on the display unit based on gaze information of a user;
   a step of determining selection of an operating portion overlapping at least a part of the pointer among the plurality of operating portions; and
   a step of transmitting, to the musical sound generation device, information conforming to a MIDI standard corresponding to the determined operating portion, in which
   the plurality of operating portions include at least one fader operating portion that switches a sound source being played from a first sound source to a second sound source.
[23] A computer-readable storage medium storing the program according to [22].

### Brief Description of Drawings

Fig. 1 is a diagram illustrating an example of a system configuration of a musical sound generation system 1 according to the present embodiment.
Fig. 2 is a block diagram illustrating an example of a hardware configuration of the musical sound generation system 1 according to the present embodiment.
Fig. 3 is a block diagram illustrating an example of a functional configuration of the musical sound generation system 1 according to the present embodiment.
Fig. 4 is a flowchart illustrating an example of an operation of the musical sound generation system 1 according to the present embodiment.
Fig. 5 is a diagram illustrating an example of a user interface of a controller 2 according to the present embodiment.
Fig. 6 is an enlarged diagram of a pointer P illustrated in Fig. 5.
Fig. 7 is a diagram illustrating an example of a fader curve associated with a fader operating portion according to the present embodiment.

### Description of Embodiments

Hereinafter, embodiments of the present invention will be described in detail with reference to the accompanying drawings. Note that, in the respective drawings, constituent components having equivalent functions are denoted by the same reference signs, and detailed description of the constituent components having the same reference signs will not be repeated.

### (Configuration of Musical Sound Generation System)

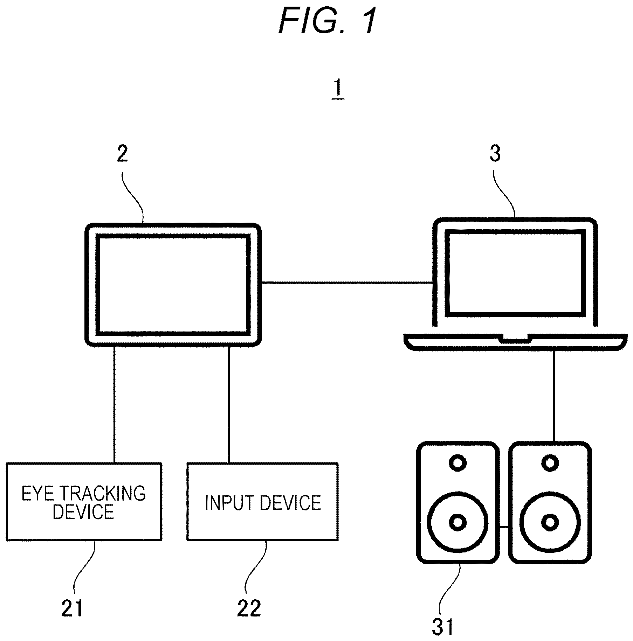

Fig. 1 is a diagram illustrating a schematic configuration of a musical sound generation system 1 according to an embodiment. As illustrated in Fig. 1, the musical sound generation system 1 according to the present embodiment includes a controller 2 and a musical sound generation device 3. The controller 2 and the musical sound generation device 3 are communicatively connected by a communication interface (I/F) which will be described later.

The controller 2 is a device that controls the musical sound generation device 3 based on a communication protocol conforming to the MIDI standard. Then, the controller 2 is connected to an eye tracking device 21 for a user with limited movement of the body, such as an ALS patient, to input various types of information to the controller 2 by gaze input, and an input device 22 on which a user performs a manual operation (the controller 2 may include the eye tracking device 21 and the input device 22).

The eye tracking device 21 tracks the eye movement (gaze direction) of a user and outputs gaze information to the controller 2. The gaze information can be generated, for example, by extracting a characteristic pattern such as a pupil from an image obtained by sequentially capturing an eyeball image of the user. The present embodiment focuses on a point that an ALS patient can move the line of sight, and controls the musical sound generation device 3 by using the gaze information.

The input device 22 is an input device that can be operated by a user, such as a manual switch or a foot switch. When the user performs an operation by using the input device 22, a signal corresponding to the operation is output from the input device 22 to the controller 2. It is desirable that the input device 22 enables a user with limited movement of the body, such as an ALS patient, to easily perform an input operation, and for example, the input operation is pressing of a switch by the body of the user.

The musical sound generation device 3 is a device that generates a musical sound based on a signal that has been received from the controller 2 and conforms to the MIDI standard. For example, by installing and executing integrated music software called a DAW (Digital Audio Workstation) on a personal computer, the personal computer can be used as the musical sound generation device. In addition, the musical sound generation device 3 includes a sound system 31 that emits a sound based on an acoustic signal.

### (Hardware Configuration)

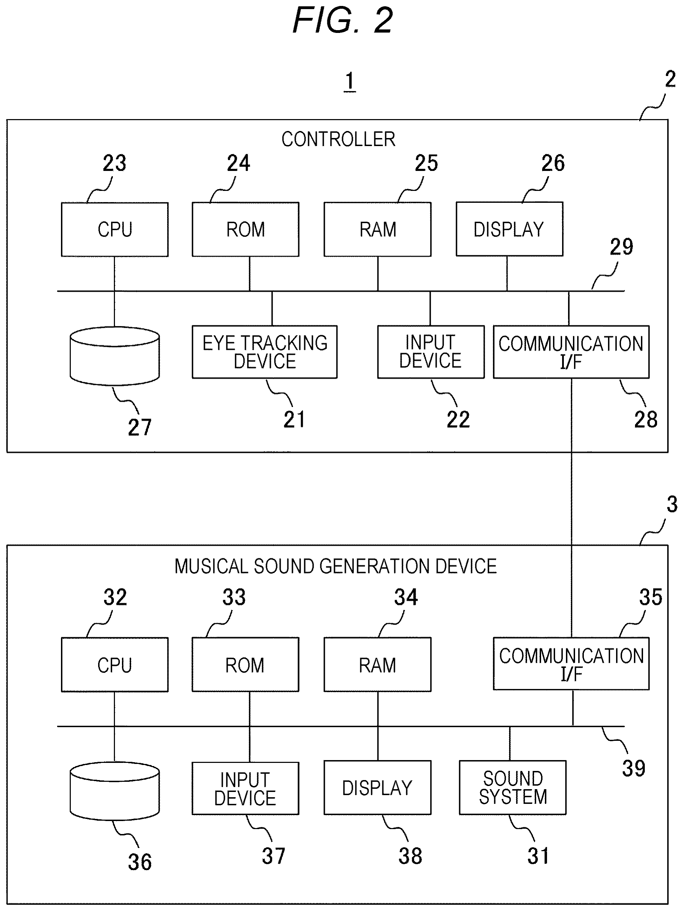

Next, a hardware configuration of the musical sound generation system 1 according to the present embodiment will be described. Fig. 2 is a block diagram illustrating an example of the hardware configuration of the musical sound generation system 1 according to the present embodiment.

In the controller 2, a CPU 23 is a processing device that controls the entire operation of the controller 2. A ROM 24 is a nonvolatile memory that stores a control program executed by the CPU 23 and various types of data. A RAM 25 is a volatile memory used for a load area and a work area of a program executed by the CPU 23. A display 26 is a display device that displays various types of information (user interface). A storage device 27 is storage means for storing various types of information, and may be built into the body of the controller 2, or a storage medium may be attachable and detachable to and from the storage device 27. A communication interface (I/F) 28 is an interface for connection with the musical sound generation device 3. A bus 29 is a bus line that connects the above constituent components to each other.

In the present embodiment, the musical sound generation device 3 has a form in which DAW software is installed on a PC. By executing the DAW software, various functions of music production (for example, a hard disk recording function, a function of creating and editing MIDI data and audio data, a mixing function, a sequencer function, and the like) can be realized. Note that, in the present embodiment, an example in which the musical sound generation device 3 is configured by a PC and DAW software will be described, but a single sequencer device or the like may be used.

In the musical sound generation device 3, a CPU 32, a ROM 33, a RAM 34, a storage device 36, an input device 37 such as a mouse and a keyboard, and a display 38 are basic components provided in a general-purpose PC. A communication I/F 35 is an interface for connection with the controller 2. Note that the communication I/Fs 28 and 35 are, for example, a wired I/F dedicated to music such as MIDI, a general-purpose wired I/F such as a USB or IEEE 1394, or a general-purpose wireless I/F such as a wireless LAN or Bluetooth (registered trademark). The sound system 31 emits an analog acoustic signal transferred from a codec which is a sound I/O including a digital-analog (D/A) conversion function or the like. The sound system 31 is a function added in a form in which a board or a card is inserted into a slot provided in the PC constituting the musical sound generation device 3. A bus 39 is a bus line that connects the above constituent components to each other.

### (Functional Configuration)

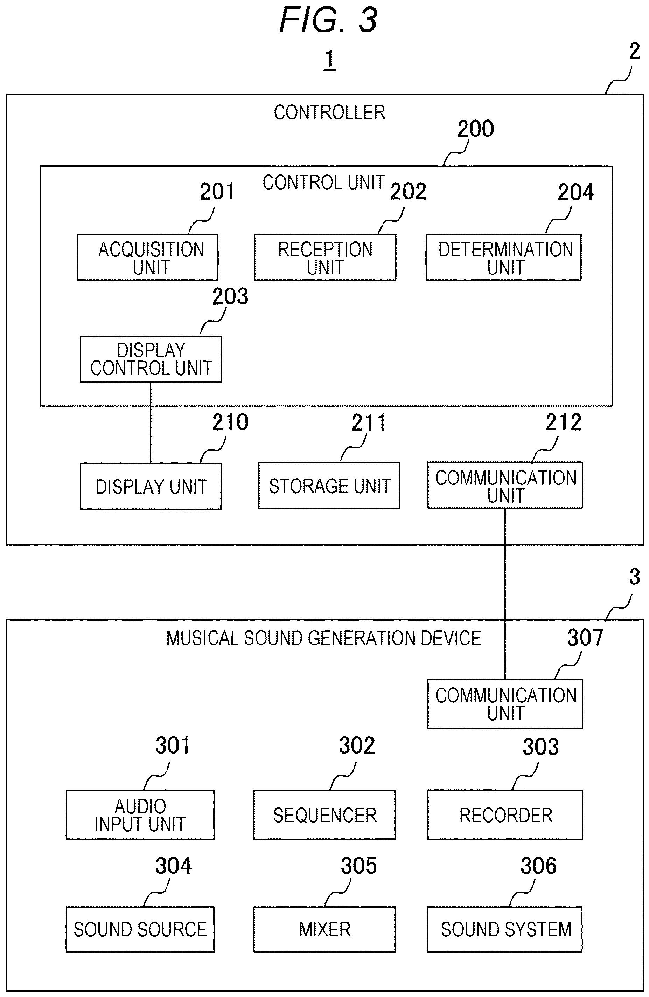

Next, a functional configuration of the musical sound generation system 1 according to the present embodiment will be described. Fig. 3 is a diagram illustrating an example of the functional configuration of the musical sound generation system 1 according to the present embodiment.

As illustrated in Fig. 3, the controller 2 has a control unit 200, a display unit 210, a storage unit 211, and a communication unit 212.

The control unit 200 has an acquisition unit 201, a reception unit 202, a determination unit 204, and a display control unit 203.

The acquisition unit 201 acquires gaze information of a user of the controller 2. Specifically, the acquisition unit 201 acquires information (gaze information) regarding the gaze direction of the user, which is output from the eye tracking device 21.

The reception unit 202 receives an input operation by the user using the input device 22 (manual switch, foot switch, and the like).

The display control unit 203 displays a plurality of operating portions (icons) associated with control commands of the musical sound generation device 3 on the display unit 210 (corresponding to the display 26 in Fig. 2) together with various types of information. In addition, the display control unit 203 displays a pointer P for operating the operating portion on the display unit 210 based on the gaze information of the user acquired by the acquisition unit 201.

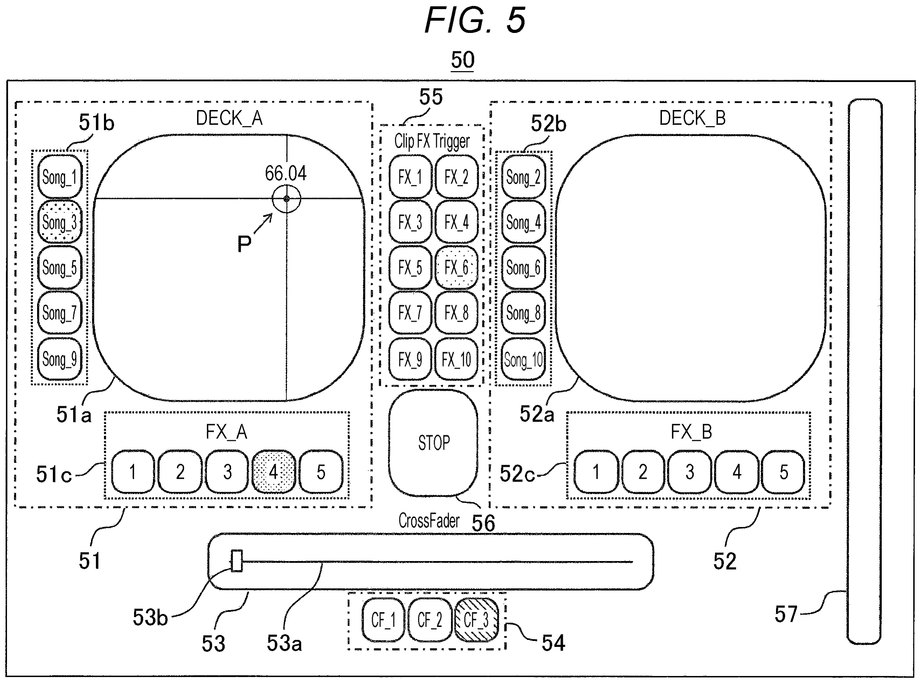

Fig. 5 is a diagram illustrating an example of a user interface 50 displayed on the display unit 210 by the display control unit 203. As illustrated in Fig. 5, the user interface 50 includes, as a plurality of operating portions, a first operating portion group 51 (DECK_A), a second operating portion group 52 (DECK_B), a cross-fader operating portion (scroll bar) 53 and a fader pattern operating portion 54 which are fader operating portions, a clip selection operating portion 55, a stop operating portion 56, and a screen switching operating portion 57. The respective operating portions (including operating portions included in the operating portion group) are associated with control commands of the musical sound generation device 3 (DAW), and, when the user operates (selects) each of the operating portions, the musical sound generation device 3 performs processing according to each control command.

The first operating portion group 51 (DECK_A) is an operating portion group in which the user performs an operation on a first sound source (an odd-numbered sound source among a plurality of sound sources scheduled to be continuously played), and is displayed on the left side of a screen on which the user interface 50 is displayed. The first operating portion group 51 includes an XY pad 51a, at least one sound source selection operating portion 51b, and at least one effect operating portion 51c.

The XY pad 51a is an operating portion with which the user can perform a two-dimensional input operation, and is an operating portion with which two types of parameters can be simultaneously changed. By moving the pointer P on the XY pad 51a, two types of parameters can be simultaneously changed. Note that the operation of the XY pad 51a may be validated while the reception unit 202 receives the operation by the input device 22. For example, the operation (change of two types of parameters) of the XY pad 51a may be enabled in a manner that the pointer P is moved on the XY pad 51a by gaze input in a state where the user presses a manual switch (input device 22). The sound source selection operating portion 51b is an operating portion for selecting a sound source (music) to be played (performed). The first operating portion group 51 includes a plurality of sound source selection operating portions (Song_1, Song_3, Song_5, Song_7, and Song_9) for selecting odd-numbered sound sources (first sound sources) among a plurality of sound sources scheduled to be continuously played. The effect operating portion 51c is an operating portion for executing sound effects.

The second operating portion group 52 (DECK _B) is an operating portion group in which the user performs an operation on a second sound source (an even-numbered sound source among the plurality of sound sources scheduled to be continuously played), and is displayed on the right side of the screen on which the user interface 50 is displayed. The second operating portion group 52 includes an XY pad 52a, at least one sound source selection operating portion 52b, and at least one effect operating portion 52c.

Since functions of the XY pad 52a and the effect operating portion 52c are similar to the functions of the XY pad 51a and the effect operating portion 51c described above, detailed description thereof will be omitted.

The sound source selection operating portion 52b is an operating portion for selecting a sound source (music) to be played (performed). The second operating portion group 52 includes a plurality of sound source selection operating portions (Song_2, Song 4, Song_6, Song_8, and Song_10) for selecting even-numbered sound sources (second sound sources) among a plurality of sound sources scheduled to be continuously played.

A cross-fader operating portion 53 is an operating portion (fader operating portion) for switching a sound source being played from the first sound source to the second sound source. The cross-fader operating portion 53 includes a substantially horizontal shaft part 53a and a knob 53b that is movable on the shaft part 53a.

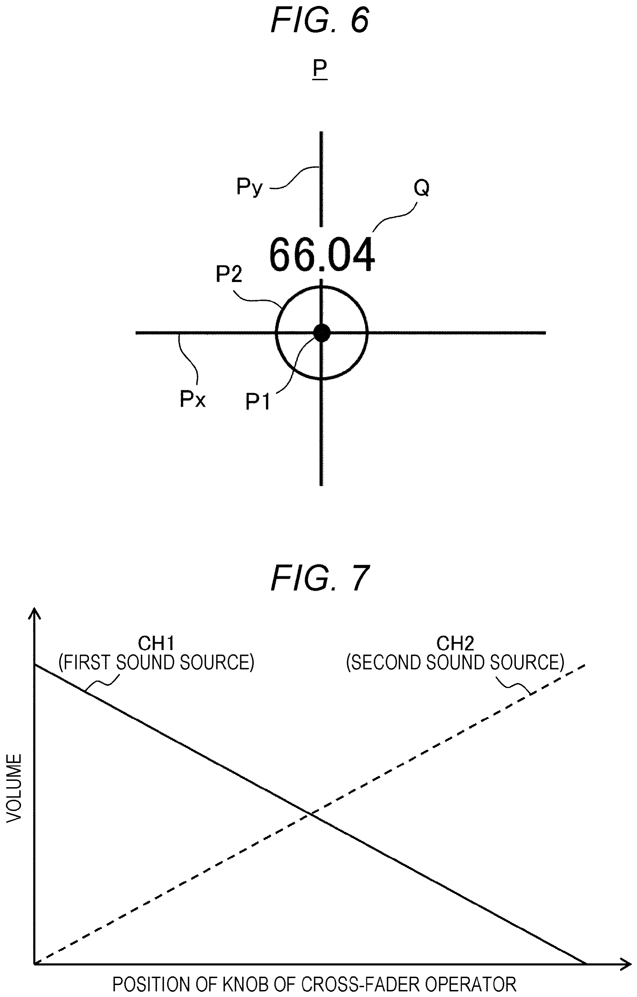

Fig. 7 is a diagram illustrating an example of a relationship (fader curve) between the horizontal position (the position on the shaft part 53a) of the knob 53b of the cross-fader operating portion 53 and the volumes of the first sound source and the second sound source. As illustrated in Fig. 7, the volume of the first sound source decreases and the volume of the second sound source increases as the knob 53b moves from the left end to the right end on the shaft part 53a. That is, by moving the knob 53b of the cross-fader operating portion 53 from the left end to the right end, the sound source being played can be switched from the first sound source to the second sound source. Note that a ratio (V2/(V1+V2)) of the volume of the second sound source to the total volume (V1+V2 [dB]) obtained by adding the volume (V1 [dB]) of the first sound source and the volume (V2 [dB]) of the second sound source may increase as the knob 53b moves from the left end to the right end on the shaft part 53a.

Further, the cross-fader operating portion 53 can change a switching speed from the first sound source to the second sound source depending on a moving speed of the knob 53b on the shaft part 53a. For example, the sound source being played can be slowly switched from the first sound source to the second sound source in a case where the knob 53b is slowly moved from the left end to the right end on the shaft part 53a, and the sound source being played can be slowly switched from the first sound source to the second sound source in a case where the knob 53b is quickly moved from the left end to the right end on the shaft part 53a.

Immediately after the sound source being played is switched from the first sound source (for example, "Song_1" illustrated in Fig. 5) to the second sound source (for example, "Song_2" illustrated in Fig. 5) by the cross-fader operating portion 53, the knob 53b of the cross-fader operating portion 53 moves to the right end. In this state, when the knob 53b of the cross-fader operating portion 53 is moved from the right end to the left end, the sound source being played can be switched from the second sound source to the first sound source. At this time, by selecting any sound source (for example, "Song_3" illustrated in Fig. 5) with the sound source selection operating portion 51b of the first operating portion group 51 in advance, it is possible to seamlessly switch the sound source according to the intention of the user (for example, switch the sound source in the order of "Song_1", "Song_2", and "Song _3").

Here, the reason why the first operating portion group 51 is used for an odd-numbered sound source (first sound source) and the second operating portion group 52 is used for an even-numbered sound source (second sound source) will be described. The cross-fader operating portion 53 can switch the sound source (music) being played from the first sound source to the second sound source (make the volume of the second sound source larger than the volume of the first sound source) by moving the knob 53b from the left end to the right end on the shaft part 53a displayed horizontally. Therefore, by arranging the first operating portion group 51 for the first sound source (odd-numbered sound source) on the left side of the screen and arranging the second operating portion group 52 for the second sound source (even-numbered sound source) on the right side of the screen so as to correspond to the behavior (moving direction) of the knob 53b of the cross-fader operating portion 53, it is possible to reduce the distance of gaze movement for performing an operation for the second sound source by the second operating portion group after the sound source switching by the cross-fader operating portion 53, and it is possible to smoothly operate the operating portion. That is, the user can smoothly perform an operating portion selection operation in the order of the first operating portion group 51, the cross-fader operating portion 53, and the second operating portion group 52 from the left side of the screen.

The fader pattern operating portion 54 is an operating portion (fader operating portion) for switching the sound source at a speed stored in advance. As described above, the cross-fader operating portion 53 switches the sound source being played from the first sound source to the second sound source by moving the knob 53b on the shaft part 53a arranged substantially horizontally. However, in order to move the knob 53b on the shaft part 53a by the gaze input operation, a certain degree of experience is required.

Therefore, in the controller 2 according to the present embodiment, a pattern (slow switching pattern, quick switching pattern, and the like) of the switching speed of the sound source preferred by the user is stored in the storage unit 211 or the like, and each stored switching pattern is assigned to each fader pattern operating portion 54 (in the example illustrated in Fig. 5, three types of "CF_1", "CF_2", and "CF_3"). As a result, the user can switch the sound source being played at a desired sound source switching speed without technically operating the cross-fader operating portion 53, by selecting the fader pattern operating portion 54 to which a desired sound source switching pattern is assigned.

After the sound source being played is switched from the first sound source to the second sound source using the fader pattern operating portion 54, the sound source being played can be switched from the second sound source to the first sound source by selecting the desired fader pattern operating portion 54 again.

Here, display control in conjunction with switching of the sound source by the fader operating portion (the cross-fader operating portion 53 and the fader pattern operating portion 54) will be described. Since the second operating portion group 52 is mainly operated after switching from the first sound source to the second sound source, the second operating portion group 52 may be highlighted. Conversely, since the first operating portion group 51 is mainly operated after switching from the second sound source to the first sound source, the first operating portion group 51 may be highlighted. That is, the display control unit 203 may highlight the first operating portion group in a case where the volume of the first sound source is larger than the volume of the second sound source, and highlight the second operating portion group in a case where the volume of the second sound source is larger than the volume of the first sound source.

The clip selection operating portion 55 is an operating portion for selecting a video clip to be displayed during playing of the sound source. A video clip stored in the storage unit 211 or the like is assigned to the clip selection operating portion 55 (in the example illustrated in Fig. 5, 10 operating portions "FX_1" to "FX_10") in advance, and when the user selects a certain clip selection operating portion, a desired video clip can be displayed on the display unit 210 or an external display unit (not illustrated).

The stop operating portion 56 is an operating portion for stopping playing of the sound source (music), and has a larger size than other operating portions in order to easily stop the playing of the sound source at a timing desired by the user.

The screen switching operating portion 57 is an operating portion for switching the screen to a screen (not illustrated) on which another operating portion is displayed, other than the user interface 50. By using the screen switching operating portion 57, it is possible to select more operating portions.

In addition, the user interface 50 includes the pointer P for operating/selecting each operating portion described above. The pointer P is displayed on the display unit 210 based on the gaze information acquired by the acquisition unit 201. Specifically, the position of a gaze point on a screen of the display unit 210 is obtained from the gaze information, and the pointer P is displayed at the obtained position.

Fig. 6 is an enlarged diagram of the pointer P illustrated in Fig. 5. As illustrated in Fig. 6, the pointer P has a reference position P1 and a circular region P2 having a predetermined size with the reference position P1 as a substantial center. In addition, an index Q is displayed near the circular region P2 of the pointer P. The index Q is an index indicating the beat and bar number of the music being performed (sound source being played) in the form of "000.00 (Beat.Bar No.)".

Further, the display control unit 203 can enlarge and display a predetermined range including the pointer P of the user interface 50. As a result, it is possible to more reliably operate/select each operating portion. Furthermore, since the index Q is displayed near the pointer P, the user can operate each operating portion while constantly checking the beat and bar number of the music being performed even at the time of enlarged display.

Returning to Fig. 3, the determination unit 204 determines selection of an operating portion overlapping at least a part of the pointer P among the plurality of operating portions. As a result, the selection of the operating portion can be determined only by the gaze input using the eye tracking device 21. In addition, the determination unit 204 may determine selection of an operating portion overlapping the reference position P1 of the pointer P. As a result, in a case where the operating portions are arranged adjacent to each other, it is possible to reduce an erroneous operation (erroneous selection) of the operating portion. Further, the determination unit 204 may determine selection of an operating portion overlapping a part of the pointer P for longer than a predetermined time (for example, 2 seconds). As a result, it is possible to more reliably determine the selection of the operating portion. Such a selection method is also useful for a user who has difficulty in an operation other than moving the line of sight since the operating portion can be selected only by the gaze information.

Furthermore, the determination unit 204 may limit an operating portion of which selection is to be determined according to switching of the sound source by the fader operating portions (the cross-fader operating portion 53 and the fader pattern operating portion 54). That is, the determination unit 204 may determine the selection of the operating portion included in the first operating portion group in a case where the volume of the first sound source is larger than the volume of the second sound source, and determine the selection of the operating portion included in the second operating portion group in a case where the volume of the second sound source is larger than the volume of the first sound source. As a result, it is possible to prevent an erroneous operation of operating the operating portion for the first sound source (first operating portion group 51) during playing of the second sound source.

In addition, the determination unit 204 may determine the selection of the operating portion according to the input operation using the input device 22 by the user, which has been received by the reception unit 202. That is, the user can select the operating portion by the gaze input using the eye tracking device 21 and determine the selection of the operating portion using the input device 22 (manual switch, foot switch, and the like). In this manner, the user can more quickly determine the selection of the operating portion as compared with a case of determining the selection of the operating portion overlapping at least a part of the pointer P for longer than a predetermined time. Such a selection method is useful for a user who can operate the input device 22 with a part of the body such as a hand or a foot in addition to moving the line of sight.

The storage unit 211 stores information regarding each control command of the musical sound generation device 3 (DAW) associated with each operating portion.

The communication unit 212 transmits, to the musical sound generation device 3, information (control command information, MIDI event information) conforming to the MIDI standard corresponding to the operating portion of which the selection has been determined by the determination unit 204.

Next, a functional configuration of the musical sound generation device 3 will be described. As illustrated in Fig. 3, the musical sound generation device 3 has an audio input unit 301, a sequencer 302, a recorder 303, a sound source 304, a mixer 305, a sound system 306, and a communication unit 307.

The audio input unit 301 inputs an analog acoustic signal converted into digital and inputs a digital acoustic signal itself.

The sequencer 302 records MIDI event information received by the communication unit 307. The MIDI event information is supplied to the sound source 304 which will be described later.

The sound source 304 is a software sound source. The sound source 304 generates an audio signal according to the input MIDI event information. The audio signal output from the sound source 304 is input to the recorder 303 and the mixer 305.

The recorder 303 records an audio signal input by the audio input unit 301 and an audio signal output from the sound source 304. The audio signal recorded in the recorder 303 is output to the mixer 305 according to a playing instruction.

The mixer 305 supplies the audio signal output from the sound source 304 or the recorder 303 to the sound system 306.

### (Example of Operation)

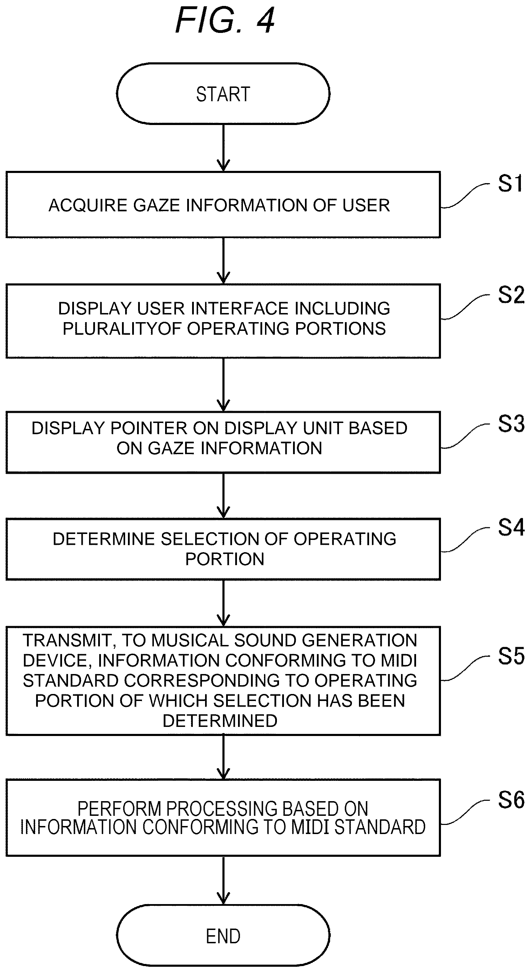

Next, an example of an operation of the musical sound generation system 1 will be described. Fig. 4 is a flowchart illustrating the example of the operation of the musical sound generation system 1.

First, the acquisition unit 201 of the control unit 200 in the controller 2 acquires the gaze information of the user output from the eye tracking device 21 (Step S1). The gaze information may be acquired at any timing, and is normally acquired in real time, for example.

Then, the display control unit 203 of the control unit 200 displays a plurality of operating portions associated with the control commands of the musical sound generation device 3 (DAW) on the display unit 210 (Step S2).

In addition, the display control unit 203 of the control unit 200 displays a pointer for operating the operating portion on the display unit 210 based on the gaze information acquired by the acquisition unit 201 (Step S3).

Then, the determination unit 204 of the control unit 200 determines selection of an operating portion overlapping at least a part of the pointer among the plurality of operating portions (Step S4).

Subsequently, the communication unit 307 transmits, to the musical sound generation device 3, information conforming to the MIDI standard corresponding to the operating portion of which the selection has been determined by the determination unit 204 (Step S5).

Then, the musical sound generation device 3 performs various types of processing (execution of control commands, recording of MIDI events, and the like) based on the information conforming to the MIDI standard, which has been received from the controller 2 (Step S6).

As described above, according to the present embodiment, the musical sound generation system 1 includes the acquisition unit 201 that acquires the gaze information of the user, the display control unit 203 that displays the plurality of operating portions associated with the control commands of the musical sound generation device on the display unit 210 and displays the pointer P for operating the operating portion on the display unit 210 based on the gaze information acquired by the acquisition unit 201, the determination unit 204 that determines the selection of the operating portion overlapping at least a part of the pointer P among the plurality of operating portions, and the communication unit 212 that transmits, to the musical sound generation device 3, information conforming to the MIDI standard corresponding to the operating portion of which the selection has been determined by the determination unit 204, and the plurality of operating portions include at least one fader operating portion (cross-fader operating portion 53 and/or fader pattern operating portion 54) for switching the sound source being played from the first sound source to the second sound source. Therefore, the user with limited movement of the body can easily control the musical sound generation device 3.

Some or all of the functional units described in the present specification may be realized by a program. The program referred to in the present specification may be distributed by being non-temporarily recorded in a computer-readable recording medium, may be distributed via a communication line (including wireless communication) such as the Internet, or may be distributed in a state of being installed on any terminal.

Based on the above description, a person skilled in the related art may be able to conceive additional effects and various modification examples of the present invention, but aspects of the present invention are not limited to the individual embodiment described above. Various additions, changes, and partial deletions can be made in a range without departing from the conceptual idea and spirit of the present invention derived from the contents defined in the claims and equivalents thereof.

For example, what has been described herein as one device (alternatively, member, the same applies below) (including what is depicted in the drawings as one device) may be realized by a plurality of devices. Conversely, what has been described herein as a plurality of devices (including what is depicted in the drawings as a plurality of devices) may be realized by one device. Alternatively, some or all of means or functions assumed to be included in a certain device (for example, a server) may be included in another device (for example, a user terminal).

In addition, not all the matters described in the present specification are essential requirements. In particular, matters described in the present specification and not described in the claims can be regarded as any additional matters.

Note that the applicant of the present invention is merely aware of the invention disclosed in the document in the column of "Citation List" in the present specification, and the present invention is not necessarily intended to solve the problem in the invention disclosed in the literature. The problem to be solved by the present invention should be recognized in consideration of the entire specification. For example, in the present specification, in a case where there is a description that a predetermined effect is exhibited by a specific configuration, it can be said that the problem of reversing the predetermined effect is solved. However, such a specific configuration is not necessarily an essential requirement.

## Claims

1. A controller configured to control a musical sound generation device, the controller comprising:
an acquisition unit configured to acquire gaze information of a user;
a display control unit configured to displays a plurality of operating portions associated with control commands of the musical sound generation device on a display unit, and display a pointer for selecting the operating portion on the display unit based on the gaze information acquired by the acquisition unit;
a determination unit configured to determine selection of an operating portion overlapping at least a part of the pointer among the plurality of operating portions; and
a communication unit configured to transmit, to the musical sound generation device, information conforming to a MIDI standard corresponding to the operating portion of which the selection has been determined by the determination unit, wherein
the plurality of operating portions include at least one fader operating portion that switches a sound source being played from a first sound source to a second sound source.

2. The controller according to claim 1, wherein the at least one fader operating portion includes a cross-fader operating portion including a shaft part and a knob, and the cross-fader operating portion continuously changes a volume of each of the first sound source and the second sound source according to a position of the knob on the shaft part.

3. The controller according to claim 1, wherein the at least one fader operating portion includes a fader pattern operating portion for continuously changing a volume of each of the first sound source and the second sound source in a pattern stored in advance.

4. The controller according to any one of claims 1 to 3, wherein the plurality of operating portions include a first operating portion group that performs an operation on the first sound source and a second operating portion group that performs an operation on the second sound source.

5. The controller according to claim 4, wherein the display control unit highlights the first operating portion group in a case where a volume of the first sound source is larger than a volume of the second sound source, and highlights the second operating portion group in a case where the volume of the second sound source is larger than the volume of the first sound source.

6. The controller according to claim 4, wherein the determination unit determines selection of an operating portion included in the first operating portion group in a case where a volume of the first sound source is larger than a volume of the second sound source, and determines selection of an operating portion included in the second operating portion group in a case where the volume of the second sound source is larger than the volume of the first sound source.

7. The controller according to claim 4, wherein the first operating portion group includes a sound source selection operating portion for selecting an odd-numbered sound source among a plurality of sound sources to be continuously played, and
the first operating portion group includes a sound source selection operating portion for selecting an even-numbered sound source among the plurality of sound sources to be continuously played.

8. The controller according to claim 7, wherein the first operating portion group is displayed on a left side of the display unit, and
the second operating portion group is displayed on a right side of the display unit.

9. The controller according to claim 8, wherein the plurality of operating portions include a plurality of clip selection operating portions for selecting a video clip to be displayed during play of a sound source, and the plurality of clip selection operating portions are displayed between the first operating portion group and the second operating portion group.

10. The controller according to claim 4, wherein the first operating portion group and the second operating portion group include an effect operating portion for applying an effect to a sound source being played.

11. The controller according to claim 4, wherein the first operating portion group and the second operating portion group include an XY pad capable of simultaneously changing two types of parameters.

12. The controller according to claim 1, wherein the plurality of operating portions include a screen switching operating portion for performing switching to a screen on which another operating portion is displayed.

13. The controller according to claim 1, further comprising: a reception unit that receives an input operation by a user using an input device, wherein
the determination unit determines the selection of the operating portion according to the input operation received by the reception unit.

14. The controller according to claim 13, wherein the input operation is pressing of a switch with a part of a body of the user, and
the determination unit determines the selection of the operating portion by using gaze information of the user without a user operation other than the pressing of the switch.

15. The controller according to claim 1, wherein the determination unit determines selection of an operating portion that overlaps at least a part of the pointer for a predetermined time.

16. The controller according to claim 1, wherein the determination unit determines selection of an operating portion overlapping a reference position of the pointer.

17. The controller according to claim 16, wherein the reference position is substantially a center of the pointer.

18. The controller according to claim 1, wherein the display control unit displays beats and bar numbers of music being performed, near the pointer.

19. The controller according to claim 1, wherein the determination unit determines the selection of the operating portion without a user operation other than the gaze information of the user.

20. A musical sound generation system including a musical sound generation device and a controller that controls the musical sound generation device, the musical sound generation system comprising:
an acquisition unit configured to acquire gaze information of a user;
a display control unit configured to display a plurality of operating portions associated with control commands of the musical sound generation device on a display unit, and display a pointer for selecting the operating portion on the display unit based on the gaze information acquired by the acquisition unit;
a determination unit configured to determine selection of an operating portion overlapping at least a part of the pointer among the plurality of operating portions; and
a communication unit configured to transmit, to the musical sound generation device, information conforming to a MIDI standard corresponding to the operating portion of which the selection has been determined by the determination unit, wherein
the plurality of operating portions include at least one fader operating portion that switches a sound source being played from a first sound source to a second sound source.

21. A method of controlling a musical sound generation device, the method comprising:
a step of acquiring gaze information of a user;
a step of displaying a plurality of operating portions associated with control commands of the musical sound generation device on a display unit, and displaying a pointer for selecting the operating portion on the display unit based on the gaze information;
a step of determining selection of an operating portion overlapping at least a part of the pointer among the plurality of operating portions; and
a step of transmitting, to the musical sound generation device, information conforming to a MIDI standard corresponding to the determined operating portion, wherein
the plurality of operating portions include at least one fader operating portion that switches a sound source being played from a first sound source to a second sound source.

22. A program for causing a computer to execute a method of controlling a musical sound generation device, the method comprising:
a step of displaying a plurality of operating portions associated with control commands of the musical sound generation device on a display unit, and displaying a pointer for selecting the operating portion on the display unit based on gaze information of a user;
a step of determining selection of an operating portion overlapping at least a part of the pointer among the plurality of operating portions; and
a step of transmitting, to the musical sound generation device, information conforming to a MIDI standard corresponding to the determined operating portion, wherein
the plurality of operating portions include at least one fader operating portion that switches a sound source being played from a first sound source to a second sound source.

23. A computer-readable storage medium storing the program according to claim 22.
